# EUROPÄISCHE PATENTSCHRIFT

(11) **EP 1 533 017 B1**
(45) Veröffentlichungstag und Bekanntmachung des Hinweises auf die Patenterteilung: **17.02.2010**
(21) Anmeldenummer: 04027210.6
(22) Anmeldetag: 16.11.2004
(51) Int. Cl.: B01D 47/06, B01D 53/68, F23J 15/00

(54) **Vorrichtung und Verfahren für die Separation von Partikeln aus thermisch nachbehandelten Prozessabgasen**
Apparatus and process for separating particles from thermally post-treated process waste gases
Dispositif et procédé pour séparer des particules des gaz post-traités thermiquement s échappant du procédé chimique

(30) Priorität: 24.11.2003 DE 10355970
(43) Veröffentlichungstag der Anmeldung: 25.05.2005
(73) Patentinhaber: DAS - Dünnschicht Anlagen Systeme GmbH, 01217 Dresden (DE)
(72) Erfinder: Frenzel, Andreas, Dr., 01219 Dresden (DE); Gehmlich, Konrad, 01662 Meissen (DE); Wiesenberg, Wido, 01109 Dresden (DE); Reichardt, Horst, Dr., 01219 Dresden (DE); Ritter, Lothar, 01465 Langebrück (DE)
(74) Vertreter: Pfenning, Meinig & Partner GbR

(56) Entgegenhaltungen:
- EP-A- 1 142 621
- DE-A- 19 600 873
- US-B1- 6 333 010

## Beschreibung

Die Erfindung betrifft ein Verfahren und eine Vorrichtung für die Separation von Partikeln aus thermisch nachbehandelten Prozessabgasen, wobei diese Prozessabgase bei der Oberflächenmodifizierung unterschiedlichster Substrate anfallen. Bei solchen Prozessen werden die entsprechenden Substrate in Vakuumanlagen beschichtet und auch die Substrate an sich sowie die entsprechenden Vakuumkammern durch das so genannte Trockenätzen gereinigt.

Die hierbei anfallenden und aus den Vakuumanlagen abgeführten Prozessabgase enthalten unterschiedliche chemische Verbindungen, die nicht ohne weiteres an die Umwelt abgegeben werden können.

So ist es üblich, die anfallenden Prozessabgase thermisch nachzubehandeln, wobei diese in eine Brennkammer eingeführt und dort in andere chemische Verbindungen umgewandelt werden.

So werden beispielsweise unterschiedliche Siliziumverbindungen aufgespalten und bei der thermischen Nachbehandlung das Silizium zu SiO₂ oxidiert.

Dieses SiO₂ ist dann neben bereits vorab im Prozessabgas enthaltenen bzw. gebildeten festen Partikeln Bestandteil des thermisch nachbehandelten Prozessabgases. Die im Prozessabgas enthaltenen und gebildeten festen Partikel weisen ein bestimmtes Korngrößenspektrum auf und neben größeren festen Partikeln ist auch ein gewisser Anteil an sehr kleinen und feinsten Partikeln, deren Korngröße deutlich unter 1 µm liegt, im nachbehandelten Prozessabgas enthalten.

Bei den in der jüngsten Vergangenheit eingeführten Vakuumanlagen müssen und werden aber immer großflächigere Substrate technologisch bearbeitet, so dass die anfallenden nachzubehandelnden Prozessabgasvolumina erheblich größer sind.

Demzufolge vergrößert sich die Gesamtmenge an festen im nachbehandelten Prozessabgas enthaltenen Partikeln und dementsprechend steigt auch die absolute Menge an feinsten festen Partikeln im nachbehandelten Prozessabgas an.

Mit der bisher für die Separation von in nachbehandelten Prozessabgasen enthaltenen festen Partikeln eingesetzten Technologien können diese sehr feinen, kleinen festen Partikel nur sehr unbefriedigend separiert werden, so dass die Menge an sehr kleinen festen Partikeln, die einer herkömmlichen thermischen Nachbehandlung unterzogen worden sind und an die Umwelt abgegeben werden, entsprechend ansteigt.

Eine gegebenenfalls zusätzlich durchzuführende Separation solcher sehr kleiner feinster fester Partikel mit herkömmlichen Techniken ist aber sehr aufwendig, da z.B. entsprechend feine Filter nur über relativ kurze Zeiträume, ohne einen Reinigungsschritt eingesetzt werden können.

Auch Versuche mit so genannten Venturiabscheidern für eine Separation solcher sehr kleinen Partikel führten nicht zum gewünschten Ergebnis, da entweder ein sehr großer Druckabfall zu verzeichnen war oder es war eine sehr hohe Energie für die Ausbildung der erforderlichen Flüssigkeitstreibstrahlen an Venturidüsen erforderlich.

In EP 1 142 621 A1 ist eine Vorrichtung zur Abgasnachbehandlung beschrieben, bei der thermisch behandeltes Abgas gekühlt und in einer weiteren Kühleinrichtung eine Agglomeration erreicht werden soll.

Die technische Lehre gemäß DE 196 00 873 A1 betrifft ein Verfahren und eine Einrichtung zur Reinigung von schadstoffhaltigen Abgasen durch Verbrennen und chemische Umsetzung mit Hilfe einer Flamme in einer Brennkammer, bei der auch eine Sprühwascheinrichtung vorhanden ist.

Aus US 6,333,010 B1 ist ein System zur Oxidation von Abgasen aus der Halbleiterherstellung bekannt, das eine Voroxidationseinheit, eine Oxidationseinheit und eine Nachoxidationseinheit aufweist. Außerdem kann das Abgas mittels Wäscher von unerwünschten Bestandteilen befreit werden.

Es ist daher Aufgabe der Erfindung, eine kostengünstige und effektive Separation von sehr kleinen festen Partikeln, die in thermisch nachbehandelten Prozessabgasen enthalten sind, vornehmen zu können und die entsprechend separierten thermisch nachbehandelten Prozessabgase toxikologisch und unter dem Umweltaspekt unbedenklich freisetzen zu können.

Erfindungsgemäß wird diese Aufgabe mit einem Verfahren mit den Merkmalen des Anspruchs 1 und mit einer Vorrichtung gemäß Anspruch 12 gelöst. Vorteilhafte Ausgestaltungsformen und Weiterbildungen der Erfindung können mit den untergeordneten Ansprüchen bezeichneten Merkmalen erreicht werden.

Die Erfindung baut auf herkömmliche Lösungen für die thermische Nachbehandlung von Prozessabgasen auf. So wird das jeweilige Prozessabgas in eine Brennerkammer eingeführt, an der mindestens ein Brenner vorhanden ist. Durch Zufuhr eines geeigneten Brenngases (z.B. CH₄, Wasserstoff oder Propangas) und einem Oxidationsmittel (Sauerstoff oder Luft) wird eine Nachbehandlung des jeweiligen Prozessabgases durchgeführt. Dabei werden chemische Verbindungen aufgespalten. Die Spaltprodukte werden in andere chemische Verbindungen, beispielsweise zu Fluorwasserstoff und Oxide umgewandelt, wobei beispielsweise aus Silizium partikelförmiges Siliziumdioxid gebildet wird. Zur Vermeidung der Bildung von Ablagerungen an der Innenwand solcher Brennkammern ist es üblich, über diese einen Film einer Waschflüssigkeit auszubilden.

Bevor das thermisch nachbehandelte Prozessabgas einer Waschstufe, in der feste Partikel separiert und beispielsweise vorab gebildeter Fluorwasserstoff chemisch umgewandelt werden können, erfolgt erfindungsgemäß vorher eine Abkühlung der nachbehandelten Prozessabgase und in einer zwischengeschalteten Agglomerationsstufe werden zumindest Teile der gebildeten kleinen festen Partikel durch eine Agglomeration in ihrem Volumen vergrößert, so dass die entsprechend vergrößerten festen Partikel in der nachgeschalteten Waschstufe aus dem nachbehandelten Prozessabgas separiert werden können.

Diese Agglomerationsstufe wird aus mindestens einem Behältnis gebildet, in dem das feste Partikel enthaltende Prozessabgas über eine bestimmte Verweilzeit für die zur Volumenvergrößerung von Partikeln führende Agglomeration gehalten wird.

Ein solches Behältnis soll dann so ausgebildet sein, dass es ein entsprechend großes Innenvolumen aufweist und die Strömungsgeschwindigkeit innerhalb eines solchen Behältnisses reduziert ist.

Hierfür soll das Innenvolumen und/oder der freie innere Querschnitt zumindest bereichsweise mindestens so groß sein, wie das Innenvolumen und/oder der freie innere Querschnitt der Brennkammer. Dadurch wird die entsprechende Strömungsgeschwindigkeit des Prozessabgases innerhalb der Agglomerationsstufe reduziert.

Die bereits angesprochene Verweilzeit in der Agglomerationsstufe sollte dabei mindestens 10 s, bevorzugt aber ca. 30 s betragen.

Die Agglomerationsstufe kann aber auch aus mehr als einem solchen Behältnis gebildet sein. Mehrere Behältnisse können dabei in einer Reihenanordnung nacheinander angeordnet sein und für die Agglomeration vom Prozessabgas sukzessive durchströmt werden.

Allein oder zusätzlich besteht aber auch die Möglichkeit, Behältnisse einer Agglomerationsstufe parallel zueinander anzuordnen, so dass mehrere Teilströme durch entsprechende Gefäße für eine Agglomeration geführt werden können. Innerhalb eines solchen Einzelstranges können dann wiederum mehrere Behältnisse in einer Reihenanordnung angeordnet sein.

Vorteilhaft ist es außerdem, die innere Oberfläche von einem oder allen Behältnissen einer Agglormerationsstufe mit einem Waschflüssigkeitsfilm zu versehen, so dass Anhaftungen von Partikeln an der inneren Wand vermieden werden können und gegebenenfalls in diesem Bereich auftretende Partikel abgespült und einer nachgeschalteten Waschstufe zugeführt werden können.

Die Agglomeration von Partikeln kann durch entsprechende Einflussnahme unterstützt werden, wobei mehrere Möglichkeiten hierfür bestehen, die allein oder in Kombination eingesetzt werden können.

So können in der Agglomerationsstufe Agglomerationskerne enthalten sein oder zusätzlich eingeführt werden. Solche Agglomerationskerne können beispielsweise eingesprühte Flüssigkeitströpfchen sein. Dabei ist eine Feinstversprühung zu bevorzugen, so dass die Anzahl von Flüssigkeitstropfen pro Volumen sehr hoch ist.

In einer anderen Alternative können Agglomerationskerne aber auch feste Partikel sein, die in die Agglomerationsstufe gegeben und von der nachbehandelten Prozessabgasströmung mitgeführt werden und so die Agglomeration von Partikeln zu deren Volumenvergrößerung gefördert wird.

Aus der Brennkammer austretende und gekühlte thermisch nachbehandelte Prozessabgase sollten eine Temperatur beim Eintritt in die Agglomerationsstufe aufweisen, die unterhalb der Siedetemperatur einer Flüssigkeit bzw. einer Waschflüssigkeit liegt, die beispielsweise in der Quenchstufe eingesetzt wird.

Die Prozessabgastemperatur am Eintritt in die Agglomerationsstufe sollte jedoch größer sein, als die Temperatur von Flüssigkeitstropfen, die innerhalb der Agglomerationsstufe eingesprüht worden sind, so dass die Agglormeration durch Thermophorese unterstützt werden kann.

Eine weitere Möglichkeit zur Unterstützung der Agglomeration besteht darin, Ultraschallwellen in das Innere der Agglomerationsstufe zu emittieren.

Im Anschluss an die erfindungsgemäß einzusetzende Agglomerationsstufe ist dann wiederum eine Waschstufe angeordnet, durch die das Prozessabgas geführt wird. In dieser Waschstufe können ein sehr hoher Anteil an festen Partikeln, der durch die erfindungsgemäß durchzuführende Agglomeration erhöht worden ist, separiert werden.

Durch eine geeignete Waschflüssigkeitsauswahl können aber auch weitere noch im Prozessabgas enthaltene kritische chemische Verbindungen gebunden oder in ungefährliche chemische Verbindungen umgewandelt werden. Dies trifft beispielsweise auf Fluorwasserstoff zu.

Eine entsprechende Nachbehandlung des Prozessabgases kann in der Waschstufe beispielsweise mit einem Waschflüssigkeitstreibstrahl, einem Sprühwäscher und/oder einer gepackten Waschkolonne erreicht werden. In der Waschstufe sollte bevorzugt zuerst ein Sprühwäscher vorgesehen sein, mit dem Verstopfungen vermieden werden können. Mit einem Flüssigkeitstreibstrahl kann dies ebenfalls vermieden werden und gleichzeitig eine Erhöhung der Förderleistung erreicht werden.

In gepackten Waschkolonnen, in denen Füllkörper angeordnet sind, steht eine größere Oberfläche für die Absorption von noch im Prozessabgas enthaltenen Schadstoffen (z.B. Fluorwasserstoff) zur Verfügung.

Je nach Ausführung können in einer solchen Waschstufe Partikel und Agglomerate größer 0,7 bis 1,5 µm aus dem nachbehandelten Prozessabgas separiert werden. Ein gewisser Anteil kleinerer Partikel kann die Waschstufe passieren und die Vorrichtung kann durch ein Nachschalten von mindestens einem elektrostatischen Abscheider ergänzt werden.

Mit einem solchen elektrostatischen Abscheider kann eine nahezu vollständige Separation von im nachbehandelten Prozessabgas enthaltenen Partikeln erreicht werden. Der Einsatz solcher elektrostatischer Abscheider ist möglich, da die Gesamtmenge an solchen sehr kleinen festen Partikeln vorab deutlich reduziert worden ist, so dass eine Beladung von elektrostatischen Abscheidern mit Partikeln über einen größeren Zeitraum möglich wird, bis der durch Hochspannung erzeugte Ionisierungsstrom zusammenbricht und ein solcher Abscheider seine Wirkung verliert.

Dies kann auch bei der erfindungsgemäßen Lösung beachtet werden und es sollten möglichst mindestens zwei elektrostatische Abscheider in einer Parallelanordnung vorhanden sein, die alternierend betrieben werden können. So kann beispielsweise aus der Waschstufe austretendes Prozessabgas zur weiteren Separation feiner fester Partikel durch einen elektrostatischen Abscheider geführt werden, während gleichzeitig in einem zweiten elektrostatischen Abscheider eine Reinigung durchgeführt wird. Die Reinigung erfolgt dabei mit Hilfe einer Waschflüssigkeit, die durch den zu reinigenden elektrostatischen Abscheider strömt und die entsprechenden am Abscheider anhaftenden festen Partikel entfernt und mitführt.

Nach erfolgter Reinigung kann durch Umschaltung der Prozessabgasstrom durch den gereinigten elektrostatischen Abscheider geführt und in dieser Zeit der jeweils andere elektrostatische Abscheider in analoger Form gereinigt werden.

Da in den einzelnen Prozessstufen jeweils eine bestimmte Behandlung des Prozessabgases durchgeführt werden soll, kann die Erfindung vorteilhaft dadurch weitergebildet werden, in dem für die jeweiligen Prozessschritte unterschiedliche Waschflüssigkeiten, die sich in ihrer Konsistenz voneinander unterscheiden, eingesetzt werden.

So kann beispielsweise eine Waschflüssigkeit in der Quenchstufe und die gleiche Waschflüssigkeit auch für die Reinigung von elektrostatischen Abscheidern eingesetzt werden.

Eine zweite Waschflüssigkeit kann der Agglomerationsstufe und der Waschstufe zugeführt werden.

So können sich die beiden Waschflüssigkeiten beispielsweise durch den jeweiligen pH-Wert und/oder in Lösung enthaltene Stoffe unterscheiden.

Nachfolgend soll die Erfindung beispielhaft näher erläutert werden.

Dabei zeigt:

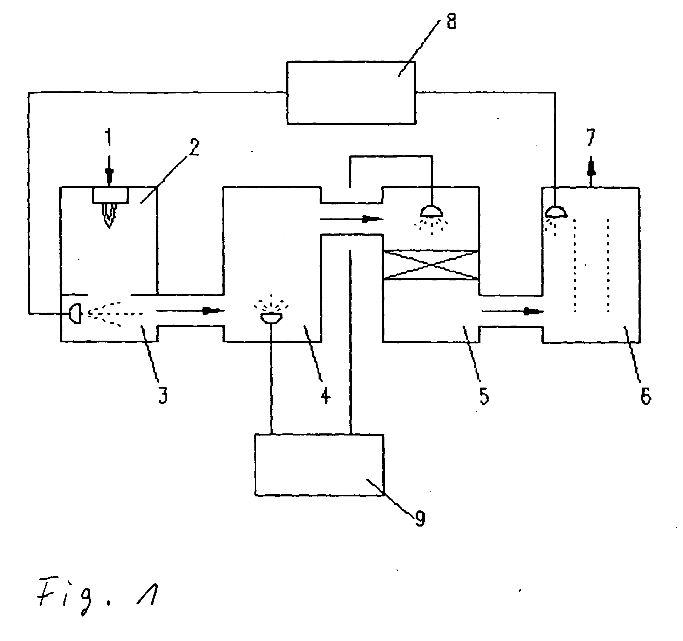

- Figur 1: in schematischer Form ein Blockschaltbild für ein Beispiel einer erfindungsgemäßen Vorrichtung.

Mit dem in Figur 1 gezeigten Blockschaltbild soll die Erfindung beispielhaft erläutert werden.

Prozessabgas einer nicht dargestellten Vakuumbeschichtungsanlage gelangt über die Prozessabgaszufuhr 1, wie mit einem Pfeil angedeutet, in eine Brennkammer 2. In der Brennkammer 2 wird dann eine an sich bekannte thermische Nachbehandlung des Prozessabgases, wie im einleitenden Teil der Beschreibung erläutert, durchgeführt.

Am Boden der Brennkammer 2 ist eine Quenchstufe 3 angeordnet, der eine erste Waschflüssigkeit aus dem Tank 8 zugeführt wird.

Mit der Quenchstufe 3 wird das thermisch nachbehandelte Prozessabgas gekühlt, wobei eine Temperatur im Bereich zwischen 30 bis 60 °C erreicht werden kann. Das thermisch nachbehandelte und gekühlte Prozessabgas gelangt über eine Verbindungsleitung in eine Agglomerationsstufe 4, die aus einem relativ großvolumigen Kunststoffbehälter gebildet ist.

In nicht dargestellter Form kann auf der inneren Wandung der Brennkammer 2 sowie der Innenwandung der Agglomerationsstufe 4 ein möglichst geschlossener Flüssigkeitsfilm ausgebildet werden, um Anhaftungen fester Partikel dort zu vermeiden.

In das Innere der Agglomerationsstufe 4 wird zur Unterstützung der Agglomeration feinster fester Partikel eine zweite Waschflüssigkeit aus einem Tank 9 eingesprüht. Das Einsprühen sollte dabei so erfolgen, dass sehr feine Flüssigkeitströpfchen innerhalb der Agglomerationsstufe vorhanden sind, die Agglomerationskerne bilden können.

Die Agglomerationsstufe 4 ist unter Berücksichtigung des Prozessabgasvolumenstroms und der entsprechenden Drücke so dimensioniert, dass für die erfindungsgemäß durchzuführende Agglomeration von feinen kleinen festen Partikeln eine Verweildauer von mindestens 30 s eingehalten werden kann.

Das Prozessabgas, das einen größeren Anteil an festen Partikeln mit einem größeren Volumen aufweist, das infolge der Agglomeration erreicht worden ist, wird über eine Verbindungsleitung einer Waschstufe 5 zugeführt, in der auch eine gepackte Kolonne mit Füllkörper integraler Bestandteil ist und in der eine Separation fester Partikel sowie eine Absorption von Fluorwasserstoff mit Hilfe der zweiten Waschflüssigkeit, die wiederum aus dem Tank 9 in die Waschstufe 5 eingeführt wird, erreicht werden kann.

Bei dem hier gezeigten Beispiel ist nachfolgend an die Waschstufe 5 über eine Verbindungsleitung ein elektrostatischer Abscheider 6, durch den das von Schadstoffen und größeren festen Partikeln weitestgehend freie Prozessabgas geführt wird, angeordnet.

Mit diesem elektrostatischen Abscheider 6 können zusätzlich noch die in ihrer Menge deutlich reduzierten feinen festen Partikel aus dem Prozessabgas separiert und über einen Abzug 7 das Prozessabgas an die Umgebung abgegeben werden. Für eine Reinigung des elektrostatischen Abscheiders 6 ist dieser mit dem Tank 8 verbunden, aus dem die erste Waschflüssigkeit für die Reinigung und Entfernung der anhaftenden feinen festen Partikel in den elektrostatischen Abscheider 6 eingeführt werden kann.

In nicht dargestellter Form sollten aber, wie ebenfalls im allgemeinen Teil der Beschreibung bereits angesprochen, möglichst mindestens zwei elektrostatische Abscheider 6 in paralleler Anordnung vorhanden sein, die alternierend für die Separation feiner fester Partikel und eine Reinigung betrieben werden können.

Im Blockschaltbild nach Figur 1 wurde auf die Darstellung von Abflüssen von Flüssigkeit aus der Agglomerationsstufe 4, der Waschstufe 5, dem elektrostatischen Abscheider 6, der Brennkammer 2 sowie auf die Erneuerung und Abführung der Waschflüssigkeiten in eine Abwasserbehandlungsanlage verzichtet.

## Patentansprüche

1. Verfahren für die Separation von Partikeln aus thermisch nachbehandelten Prozessabgasen, bei dem das in einer Brennkammer (2) thermisch nachbehandelte Prozessabgas gekühlt und eine Vergrößerung der Partikelgröße von im Prozessabgas enthaltenen festen Partikeln durch Agglomeration feiner fester Partikel in einer Agglomerationsstufe (4) durchgeführt wird; und
feste Partikel aus dem nachbehandelten Prozessabgas in einer Waschstufe (5) separiert werden,
**dadurch gekennzeichnet, dass**
in der Agglomerationsstufe (4) die Strömungsgeschwindigkeit des Prozessabgases so reduziert wird, dass das Prozessabgas über eine zur Volumenvergrößerung und Agglomeration von Partikeln führende bestimmte Verweilzeit in der Agglomerationsstufe gehalten wird.

2. Verfahren nach Anspruch 1, **dadurch gekennzeichnet, dass** das aus der Brennkammer (2) abgezogenene Prozessabgas auf eine Temperatur unterhalb der Siedetemperatur einer Waschflüssigkeit in einer Quenchstufe, als Kühler (3) abgekühlt und dann der Agglomerationsstufe (4) zugeführt wird.

3. Verfahren nach Anspruch 1 oder 2, **dadurch gekennzeichnet, dass** für die Agglomeration eine Verweildauer in der Agglomerationsstufe (4) von mindestens 10 s eingehalten wird.

4. Verfahren nach einem der Ansprüche 1 bis 3, **dadurch gekennzeichnet, dass** die Agglomeration mittels in der Agglomerationsstufe (4) enthaltenen und/oder eingeführten Agglomerationskernen unterstützt wird.

5. Verfahren nach Anspruch 4, **dadurch gekennzeichnet, dass** für die Unterstützung der Agglomeration Flüssigkeitstropfen eingesprüht werden.

6. Verfahren nach einem der Ansprüche 1 bis 5, **dadurch gekennzeichnet, dass** durch Einhaltung einer Mindesttemperatur des in die Agglomerationsstufe (4) eingeführten nachbehandelten Prozessabgases die Agglomeration durch Thermophorese unterstützt wird.

7. Verfahren nach einem der Ansprüche 1 bis 6, **dadurch gekennzeichnet, dass** die Agglomeration mittels Ultraschallwellen unterstützt wird.

8. Verfahren nach einem der Ansprüche 1 bis 7, **dadurch gekenntzeichnet, dass** zur Separation feiner fester Partikel, das Prozessabgas durch mindestens einen elektrostatischen Abscheider (6) im Anschluss an die Waschstufe (5) geführt wird.

9. Verfahren nach Anspruch 8, **dadurch gekennzeichnet, dass** das Prozessabgas alternierend durch mindestens zwei elektrostatische Abscheider (5) geführt wird.

10. Verfahren nach Anspruch 9, **dadurch gekennzeichnet, dass** in einem elektrostatischen Abscheider (6) eine Partikelseparation und parallel hierzu in jeweils einem anderen elektrostatischen Abscheider (6) eine Reinigung durchgeführt werden.

11. Verfahren nach einem der Ansprüche 1 bis 10, **dadurch gekennzeichnet, dass** in einzelnen Prozess schritten mindestens zwei Waschflüssigkeiten unterschiedlicher Konsistenz eingesetzt werden.

12. Vorrichtung für die Separation von Partikeln aus thermisch nachbehandelten Prozessabgasen für die Durchführung eines Verfahrens nach einem der Ansprüche 1 bis 11, mit einer Brennkammer (2) und dabei in Strömungsrichtung des thermisch nachbehandelten Prozessabgases nach der Brennkammer (2) ein Kühler (3) und nach dem Kühler (3) eine Agglomerationsstufe, die mit mindestens einem Behälter gebildet ist, (4) angeordnet ist und eine nachfolgend angeordnete Waschstufe (5), die mit einem Waschflüssigkeitstreibstrahl, als Sprühwäscher.und/oder gepackte Waschkolonne ausgebildet ist, vorhanden ist,
**dadurch gekennzeichnet, dass** das Innenvolumen der Agglomerationsstufe (4) größer, als das Innenvolumen der Brennkammer (2) ist.

13. Vorrichtung nach Anspruch 12, **dadurch gekennzeichnet, dass** der Kühler (3) als Quenchstufe mit einer Zufuhr für eine Waschflüssigkeit ausgebildet ist.

14. Vorrichtung nach Anspruch 12 oder 13, **dadurch gekennzeichnet, dass** in der/die Agglomerationsstufe (4) Agglomerationskerne enthalten oder einführbar sind.

15. Vorrichtung nach Anspruch 14, **dadurch gekennzeichnet, dass** die Agglomerationskerne eingesprühte Flüssigkeitströpfchen sind.

16. Vorrichtung nach einem der Ansprüche 12 bis 15, **dadurch gekennzeichnet, dass** die Innenwand der Agglomerationsstufe (4) mit einem Film einer Waschflüssigkeit benetzt ist.

17. Vorrichtung nach einem der Ansprüche 12 bis 16, **dadurch gekennzeichnet, dass** die Agglomerationsstufe (4) aus mehreren Behältnissen, die in einer Reihe und/oder parallel zueinander angeordnet sind, gebildet ist.

18. Vorrichtung nach einem der Ansprüche 12 bis 17, **dadurch gekennzeichnet, dass** nach der Waschstufe (5) mindestens ein elektrostatischer Abscheider (6) angeordnet ist.

19. Vorrichtung nach Anspruch 18, **dadurch gekennzeichnet, dass** an einem elektrostatischen Abscheider (6) eine Zufuhr für eine Waschflüssigkeit vorhanden ist.

20. Vorrichtung nach einem der Ansprüche 12 bis 19, **dadurch gekennzeichnet, dass** Quenchstufe (3) und elektrostatische(r) Abscheider (6)an einen Vorratsbehälter (8) für eine erste Waschflüssigkeit sowie Agglomerationsstufe (4) und Waschstufe (5) an einen Vorratsbehälter (9) für eine zweite Waschflüssigkeit angeschlossen sind.

## Claims

1. A method of separating particles from thermally post-treated process waste gases, in which the process waste gas thermally post-treated in a combustion chamber (2) is cooled and an increase in the particle size of solid particles contained in the process waste gas is carried out through agglomeration of fine, solid particles in an agglomeration stage (4); and solid particles are separated from the post-treated process waste gas in a washing stage (5), **characterised in that** the flow speed of the process waste gas is reduced so much in the agglomeration stage (4) that the process waste gas is kept in the agglomeration stage for a given residence time leading to the volume increase and agglomeration of particles.

2. A method according to claim 1, **characterised in that** the process waste gas drawn from the combustion chamber (2) is cooled to a temperature below the boiling temperature of a washing fluid in a quench stage in the capacity of a cooler (3) and is then supplied to the agglomeration stage (4).

3. A method according to claim 1 or 2, **characterised in that** a residence time in the agglomeration stage (4) of at least 10 s is observed for the agglomeration.

4. A method according to any one of claims 1 to 3, **characterised in that** the agglomeration is promoted by means of agglomeration nuclei contained in and/or introduced into the agglomeration stage (4).

5. A method according to claim 4, **characterised in that** fluid drops are sprayed-in to promote the agglomeration.

6. A method according to any one of claims 1 to 5, **characterised in that** the agglomeration is promoted by thermophoresis through observance of a minimum temperature of the post-treated process waste gas introduced into the agglomeration stage (4).

7. A method according to any one of claims 1 to 6, **characterised in that** the agglomeration is promoted by ultrasonic waves.

8. A method according to any one of claims 1 to 7, **characterised in that** to separate fine, solid particles, the process waste gas is guided through at least one electrostatic separator (6) subsequent to the washing stage (5).

9. A method according to claim 8, **characterised in that** the process waste gas is guided alternately through at least two electrostatic separators (5).

10. A method according to claim 9, **characterised in that** particle separation is carried out in an electrostatic separator (6) and cleaning is carried out parallel thereto in another electrostatic separator (6).

11. A method according to any one of claims 1 to 10, **characterised in that** at least two washing fluids of differing consistency are used in individual process steps.

12. A device for separating particles from thermally post-treated process waste gases to carry out a method according to any one of claims 1 to 11, having a combustion chamber (2) and, in the flow direction of the thermally post-treated process waste gas, a cooler (3) is arranged after the combustion chamber (2) and an agglomeration stage (4), formed by at least one container, is arranged after the cooler (3), and a subsequently arranged washing stage (5) is present which has a washing fluid power jet as a spray washer and/or a packed wash column, **characterised in that** the internal volume of the agglomeration stage (4) is greater than the internal volume of the combustion chamber (2).

13. A device according to claim 12, **characterised in that** the cooler (3) is in the form of a quench stage with a feed for a washing fluid.

14. A device according to claim 12 or 13, **characterised in that** agglomeration nuclei are contained in the agglomeration stage (4) or can be introduced therein.

15. A device according to claim 14, **characterised in that** the agglomeration nuclei are sprayed-in fluid drops.

16. A device according to any one of claims 12 to 15, **characterised in that** the inside wall of the agglomeration stage (4) is wetted with a film of a washing fluid.

17. A device according to any one of claims 12 to 16, **characterised in that** the agglomeration stage (4) is formed of a plurality of containers arranged in a row and/or parallel to one another.

18. A device according to any one of claims 12 to 17, **characterised in that** at least one electrostatic separator (6) is arranged after the washing stage (5).

19. A device according to claim 18, **characterised in that** a feed for a washing fluid is present at an electrostatic separator (6).

20. A device according to any one of claims 12 to 19, **characterised in that** the quench stage (3) and the electrostatic separator(s) (6) are attached to a storage vessel (8) for a first washing fluid and the agglomeration stage (4) and the washing stage (5) are attached to a storage vessel (9) for a second washing fluid.

## Revendications

1. Procédé pour la séparation de particules provenant de gaz d'échappement de processus retraités thermiquement, dans lequel le gaz d'échappement de processus retraité thermiquement dans une chambre de combustion (2) est refroidi et un grossissement de la taille de particules solides contenues dans le gaz d'échappement de processus est réalisé par agglomération de fines particules solides dans un étage d'agglomération (4) ; et
des particules solides issues du gaz d'échappement de processus retraité sont séparées dans un étage de lavage (5),
**caractérisé en ce que**,
dans l'étage d'agglomération (4), la vitesse d'écoulement du gaz d'échappement de processus est réduite de manière à maintenir le gaz d'échappement de processus pendant un temps de séjour déterminé menant à l'augmentation de volume et à l'agglomération de particules dans l'étage d'agglomération.

2. Procédé selon la revendication 1, **caractérisé en ce que** le gaz d'échappement de processus extrait de la chambre de combustion (2) est refroidi à une température inférieure à la température d'ébullition d'un liquide de lavage dans un étage de trempe sous la forme d'un dispositif de refroidissement (3) et acheminé ensuite à l'étage d'agglomération (4).

3. Procédé selon la revendication 1 ou 2, **caractérisé en ce que**, pour l'agglomération, on maintient un temps de séjour dans l'étage d'agglomération (4) d'au moins 10 s.

4. Procédé selon l'une quelconque des revendications 1 à 3, **caractérisé en ce que** l'agglomération est soutenue au moyen de noyaux d'agglomération contenus et/ou introduits dans l'étage d'agglomération (4).

5. Procédé selon la revendication 4, **caractérisé en ce que** des gouttes de liquide sont pulvérisées pour le soutien de l'agglomération.

6. Procédé selon l'une quelconque des revendications 1 à 5, **caractérisé en ce qu'**en maintenant une température minimale du gaz d'échappement de processus retraité introduit dans l'étage d'agglomération (4), l'agglomération est soutenue par thermophorèse.

7. Procédé selon l'une quelconque des revendications 1 à 6, **caractérisé en ce que** l'agglomération est soutenue au moyen d'ondes ultrasonores.

8. Procédé selon l'une quelconque des revendications 1 à 7, **caractérisé en ce que**, pour la séparation de fines particules solides, le gaz d'échappement de processus est acheminé à travers au moins un séparateur électrostatique (6) disposé à la suite de l'étage de lavage (5).

9. Procédé selon la revendication 8, **caractérisé en ce que** le gaz d'échappement de processus est acheminé en alternance à travers au moins deux séparateurs électrostatiques (5).

10. Procédé selon la revendication 9, **caractérisé en ce que** l'on effectue une séparation de particules dans un séparateur électrostatique (6) et, en parallèle avec celle-ci, une purification dans respectivement un autre séparateur électrostatique (6).

11. Procédé selon l'une quelconque des revendications 1 à 10, **caractérisé en ce que**, dans des étapes de processus individuelles, on utilise au moins deux liquides de lavage de consistance différente.

12. Dispositif pour la séparation de particules provenant de gaz d'échappement de processus retraités thermiquement destiné à la réalisation d'un procédé selon l'une quelconque des revendications 1 à 11, comprenant une chambre de combustion (2) et, en l'occurrence, est aménagé (4) un dispositif de refroidissement (3) dans le sens d'écoulement du gaz d'échappement de processus retraité thermiquement après la chambre de combustion (2) et, après le dispositif de refroidissement (3), un étage d'agglomération (4) qui est formé d'au moins un récipient, et il y a un étage de lavage (5), agencé à la suite, qui se présente avec un jet propulseur de liquide de lavage sous la forme d'une colonne de lavage par pulvérisation et/ou d'une colonne de lavage garnie,
**caractérisé en ce que** le volume interne de l'étage d'agglomération (4) est supérieur au volume interne de la chambre de combustion (2) .

13. Dispositif selon la revendication 12, **caractérisé en ce que** le dispositif de refroidissement (3) se présente sous la forme d'un étage de trempe avec une alimentation pour un liquide de lavage.

14. Dispositif selon la revendication 12 ou 13, **caractérisé en ce que** des noyaux d'agglomération sont contenus ou peuvent être introduits dans l'étage d'agglomération (4).

15. Dispositif selon la revendication 14, **caractérisé en ce que** les noyaux d'agglomération sont des gouttelettes de liquide pulvérisées.

16. Dispositif selon l'une quelconque des revendications 12 à 15, **caractérisé en ce que** la paroi interne de l'étage d'agglomération (4) est mouillée par un film d'un liquide de lavage.

17. Dispositif selon l'une quelconque des revendications 12 à 16, **caractérisé en ce que** l'étage d'agglomération (4) est formé de plusieurs récipients qui sont aménagés en série et/ou en parallèle l'un avec l'autre.

18. Dispositif selon l'une quelconque des revendications 12 à 17, **caractérisé en ce que** l'on aménage au moins un séparateur électrostatique (6) après l'étage de lavage (5).

19. Dispositif selon la revendication 18, **caractérisé en ce qu'**une alimentation pour un liquide de lavage est présente sur un séparateur électrostatique (6).

20. Dispositif selon l'une quelconque des revendications 12 à 19, **caractérisé en ce que** l'on raccorde l'étage de trempe (3) et le ou les séparateurs électrostatiques (6) à un réservoir de stockage (8) pour un premier liquide de lavage et l'étage d'agglomération (4) et l'étage de lavage (5) à un réservoir de stockage (9) pour un second liquide de lavage.
